# EUROPEAN PATENT APPLICATION

(11) **EP 1 643 468 A1**
(43) Date of publication of application: **05.04.2006**
(21) Application number: 05254568.8
(22) Date of filing: 21.07.2005
(51) Int. Cl.: G07F 19/00

(54) **An automated teller machine**

(30) Priority: 30.09.2004 GB 0421743
(71) Applicant: NCR International, Inc., Dayton, Ohio 45479 (US)
(72) Inventor: Black, Jonathan Simon, Dundee DD2 1BN (GB); Forrest, Simon James, Dundee DD3 6BW (GB); McNamara, Michael Robertson, Portobello Edinburgh EH15 2BD (GB)
(74) Representative: Williamson, Brian

(57) **Abstract**

An automated teller machine (ATM) is adapted to receive a text message from a mobile telecommunications device provided through an RF communications system. The ATM then interprets the received text message, and provides information or a service in response to the received text message.

## Description

The present invention relates to an automated teller machine (ATM).

ATMs currently provide many services, most of which relate to financial transactions. In the increasingly competitive banking arena, financial service providers are continually looking for innovative new services to include in their ATMs in order to differentiate them from their competitors. In addition, the proliferation of accessibility legislation increasingly requires service providers to ensure that ATMs within their network are accessible to all users, including the blind. In the past ATMs have generally been accessed through a user interface including a display screen and a key pad for entering user data and requests. Facilities have also been made available for blind users to communicate verbally with the ATM via a microphone and either a broadcast speaker or a plug-in headset. These systems have a number of problems, for example, security can be compromised if a user is required to raise their voice to be detected by the ATM microphone. Also, broadcasting information this way is extremely insecure; hence the use of plug-in headsets. However, even the use of a plug-in head set is inconvenient, as users may rarely use the headsets and may not be used to the sound levels required. The sockets into which these headsets are plugged can also be vandalised rendering them inoperative. In addition, it is known to utilise a mobile phone to access an ATM, through a mobile phone communications system, in short by calling the ATM and forwarding data and requests to the ATM using the mobile phone. However, providing the sort of information required to process a financial transaction over a public telephone network also has significant security risks.

An object of the present invention is to ameliorate the problems described above.

According to one aspect of the present invention, there is provided a self-service terminal that is adapted to receive an audio or text message from a mobile device; interpret the received audio or text message, and provide information or a service in response to the received message, characterised in that the message is provided through an RF communications system.

Preferably, the mobile device is a telecommunications device, most preferably a mobile phone.

Most preferably the RF communications system utilised is Bluetooth.

Where the message is a text message the ATM may include a receiver for receiving the text message and a computer program for interpreting the received message and causing the information and/or service to be provided.

Where the message is an audio message, the self-service terminal includes speech recognition software for interpreting the message and a computer program for causing the information and/or service to be provided. The speech recognition software and computer program may be provided as a single integrated computer program or may be provided separately.

The self-service terminal may include a printer. The terminal may be adapted to print out the information requested and provide the printed out information to the customer.

According to another aspect of the invention, there is provided a method comprising: receiving at a self-service terminal a text or audio message from a mobile device; interpreting the received text or audio message, and providing information and/or a service in response to the received text or audio message, characterised in that the message is provided through an RF communications system.

Where the message is an audio message, the method may further involve using speech recognition software for interpreting the message and a computer program for causing the information and/or service to be provided. The speech recognition software and computer program may be provided as a single integrated computer program or may be provided separately.

The method may further involve printing out the information requested and providing the printed out information to the customer.

The method may further involve sending a text message from the self-service terminal to the mobile device.

The present invention has a number of advantages, including the fact that using an RF connection like Bluetooth allows the consumer to interact with the ATM without using the mobile phone network, the connection is purely local between the handset and the ATM. This avoids any problems of mobile cell congestion or mobile phone network problems leading to dropped calls or the voice signal breaking up in areas of poor coverage. Due to the nature of the local RF link between the phone and the ATM the consumer does not have the same potential problems as accessing the system through the mobile phone network. That is proving which ATM they are accessing and that they are in close enough proximity to the device, i.e. not at the end of a queue, to actually complete the transaction by taking them cash that they have withdrawn. The system could also be used to arrange one or more transactions prior to arrival at the ATM by providing the voice input to the system, which can then be stored in the phone for transmission to the ATM, when they reach it or the front of the queue. This would cut down the transaction time for the consumer and also increase the security of the transaction since the transaction could be sent in one burst to the ATM avoiding the consumer spending a long time at the ATM.

Embodiments of the present invention will now be described, by way of example, with reference to the accompanying drawings in which:
Figure 1 is a schematic view of an automated teller machine, in which a panel is open to expose a portion of the interior of the machine; and
Figure 2 is a block diagram of a mobile communications module and a core processing module that are provided in the ATM of Figure 1.

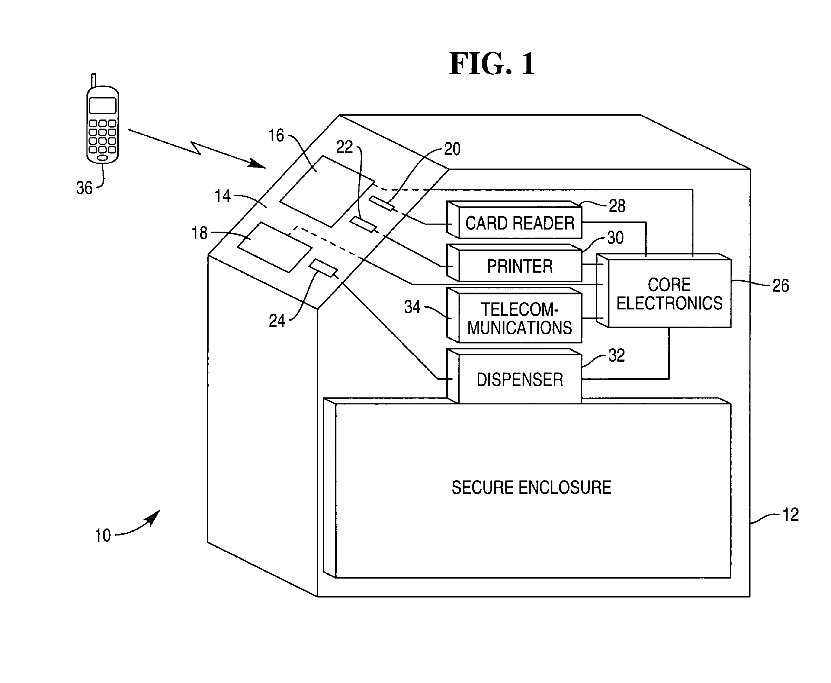

Figure 1 shows an automated teller machine 10. This has a housing 12 with a front fascia 14 that has a screen 16 for presenting financial information to a customer; a keyboard 18 for receiving user inputs; a card slot 20 for receiving a customer's card; a print-out slot 22 through which printed material is dispensed and a slot 24 for dispensing cash through.

Included in the ATM housing is a control module 26 that is operable to control access to the banking network and any financial transactions. This is connected to each of a card reader mechanism 28 that is aligned with the card slot 20, a printer 30 that is aligned with the print out slot 22 and a dispensing mechanism 32 that is aligned with the dispensing slot 24. The card reader mechanism 28 is operable to receive and read cards that are inserted into the slot 20. Information read from the card by the card reader 28 can be transmitted to the control module 26 for further processing. The printer 30 is operable to print out financial information, such as bank statements, under the control of the control module 26. The dispensing mechanism 32 is operable to dispense cash that is stored in a secure enclosure, again under the control of the control module 26.

All of the previously described features of Figure 1 are commonplace in ATMs and so will not be described in detail. In the present case, however, also included in the machine of Figure 1 is a wireless communications module 34 for allowing communication between the ATM 10 and a mobile device 36, such as a mobile telephone, via, for example, Bluetooth.

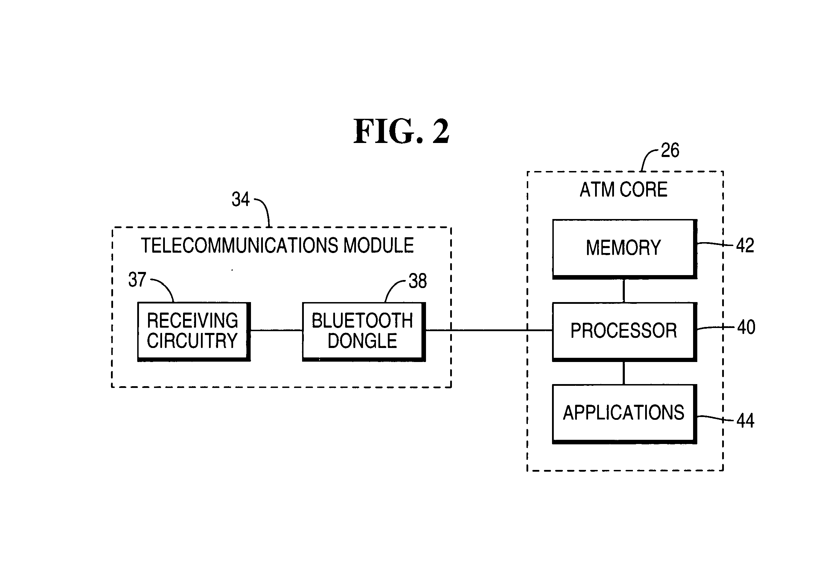

The wireless communications module 34 is shown in more detail in Figure 2. This includes a receiver 37 for receiving signals from a wireless device, such as a mobile telephone, via an RF network, such as Bluetooth and a communication port or connector, such as USB Bluetooth Dongle 38, or a PCI card, for allowing the terminal 10 access to the Bluetooth system. The wireless communications module 34 is connected to a processor 40 that is provided in the ATM core module 26. Also included in the ATM core 26 is a software application space 44 that includes a computer program for allowing access to the stored information and a memory 42 for storing information for presenting to a user. The core processor 40 is operable to communicate with each of the USB Bluetooth Dongle 38 and the memory 42 and is configured to run the computer program. It should be noted that the core processor 40 is operable to control other functionality in the ATM 10 and is not dedicated for use with the telecommunications module 34.

The control program stored in the ATM core 26 is operable to control the provision of information to customers in response to requests received via RF messages. To this end, the program is adapted to interpret text messages received at the Dongle 38; identify the information requested by the customer and cause the printer 30 to provide printed out information to a user in response to a text messages received at the Dongle 38. In this way, a customer can interact with the terminal 10 and receive information therefrom or process an ATM transaction merely by using a Bluetooth enabled mobile telephone 36.

In order for the ATM to communicate with the mobile device, the Bluetooth enabled device needs to support a profile which can be matched with the device. In this embodiment the ATM has an 'Audio Gateway' profile, used to broadcast audio. The Bluetooth headset or mobile phone has a `Headset' or 'Hands-free' profile which is able to receive information from the 'Audio Gateway' profile.

One of the main stumbling blocks in creating a connection between two Bluetooth devices is `Pairing'. This is the process of mutually allowing access between services on the devices. Not all devices are the same. They have different security threshold levels, with ATMs having a very high security level. Some devices allow you to connect without pairing if you know the exact device address of the device, others require pairing to take place the first time the devices try to interact with one another, this is done by one device creating a PIN and the other verifying that they know the PIN.

Through the use of a Customer Relationship Management (CRM) database it is possible to store a customer's Bluetooth device information against their account, and in cases were extra security is required for their device, they could provide a PIN number that they would use in the first meeting between a self-service device and their device.

Two communication scenarios will now be described.

### Scenario 1

User has Bluetooth device that does not require PIN.
1. User registers their Bluetooth device address with CRM system. This could be through the Bank hosted internet site or visiting the branch and providing the details. The Bluetooth address is a unique identifier taking the form *xx:xx:xx:xx,* where x is a hexadecimal value.
2. User initiates transaction at an ATM by inserting their card, and enters their PIN.
3. The CRM system pulls information relating to the customer down to ATM for the client application to use.
4. The application makes a call to the Bluetooth device based on the stored Bluetooth address, and informs the user through a visual or other prompt that they should answer their device if they have it with them.
5. If the user does not answer their device, the application would continue as normal. However if the user answers their device, audio prompts are delivered based on the users interaction with the application. i.e. audio prompt as they hover over an option on a touch screen, or providing audio feedback when the PIN Pad is used. Extra direction could be provided as to when and where their cash has been presented. In situations where CRM marketing messages are sent to the ATM, these messages could also be read.
6. After the customer has completed the interaction the ATM will instigate a disconnection from the Bluetooth device. The user may choose to disconnect the call themselves, in which case they would not receive any further audio messages throughout the consumer flow.

### Scenario 2

User has Bluetooth device that requires PIN
1. User registers their Bluetooth device address with CRM system, and their authorization code.
2. When the user first uses the ATM they should ensure that their Bluetooth device is in the pairing state. If the user has used the ATM before, that is the device has been paired with the ATM, then go to step 7.
3. The ATM will search for devices in the area and initiate pairing with the device matching the user's Bluetooth device address.
4. If the Bluetooth device has no visual interface e.g. headset, there is nothing for the user to do at this stage. However if the device has a visual interface, the user may be prompted to enter their authorization code. The user should enter the code that they registered with the system.
5. The ATM will be prompted for an authorization code, and can submit the number stored in the customers details. Pairing should complete, and the ATM can specify which services the Bluetooth device is authorized to use on this ATM. For example the audio gateway.
6. The application will continue from step 3 of scenario 1.

Both these scenarios can be applied to any Bluetooth device supporting the correct profiles, whether this be a headset, an in car kit, or a mobile phone.

For added security the user would also register additional information, such as, the international mobile equipment identifier for his Bluetooth enabled telecommunications device, or the Wireless Identity Module etc.

Only appropriate profiles will be set as authorized on the ATM, to restrict the risk of security attacks e.g. just the audio gateway and/or headset profiles, rather than serial ports, ftp etc...

A skilled person will appreciate that variations of the disclosed arrangements are possible without departing from the invention. For example, whilst in the examples described Bluetooth is utilised, any local RF communication system can be utilised. In addition, voice communication provides an opportunity to incorporate a voice biometrics system at the ATM to validate the consumer replacing the normal card/PIN interface enhancing security. The security built into the phone could also be used as a verification system for the consumer. The next phase of phone security will be based on a Wireless Identity Module (WIM), similar to a Subscriber Identity Module (SIM) built into the phone for access. This will allow the phone to become a Personal Trusted Device (PTD) for the consumer and provide Public Key Infrastructure (PKI) access as a secure channel of authentication for the consumer.

## Claims

1. An automated teller machine that is adapted to: receive a text or audio message from a mobile device; interpret the received text or audio message, and provide information or a service in response to the received text or audio message, **characterised in that** the message is provided through an RF communications system.

2. An automated teller machine as claimed in claim 1 that includes a receiver for receiving the text message and a computer program for interpreting the received message and causing the information and/or service to be provided.

3. An automated teller machine as claimed in claim 1 or claim 2, comprising speech recognition software for interpreting the audio message received from the mobile device.

4. An automated teller machine, as claimed in any preceding claim, wherein the RF communications system is Bluetooth.

5. An automated teller machine, as claimed in claim 4, comprising a USB Bluetooth Dongle or a PCI card.

6. An automated teller machine as claimed in any of the preceding claims, including a printer, the terminal being adapted to cause the printer to print out the information requested.

7. An automated teller machine as claimed in any of the preceding claims, which is configured to send a message to a mobile device in response to the text or audio message received there from.

8. An automated teller machine as claimed in any preceding claim, wherein information required to enable pairing of the ATM and a mobile device is stored in a customer relationship management (CRM) database, which is accessible to the ATM to authenticate the device prior to a communications session.

9. A method comprising: receiving at an automated teller machine a text or audio message from a mobile device; interpreting the received text or audio message, and providing information or a service in response to the received text or audio message, **characterised in that** the message is provided through an RF communications system.

10. A method as claimed in claim 9 further involving sending a text message from the automated teller machine to the mobile device.

11. A method as claimed in claim 9 or claim 10, wherein information required to enable pairing of the ATM and a mobile device is stored in a customer relationship management (CRM) database, and is accessed by the ATM, to authenticate the device, prior to a communications session.

12. A computer program, preferably on a data carrier or computer readable medium, for use in an automated teller machine, the computer program having code or instructions for: interpreting a text or audio message received from a mobile device, via an RF communications system, and providing information or a service in response to the received text or audio message.

13. An automated teller machine substantially as described hereinbefore with reference to the accompanying drawings and as shown in Figure 1 or Figure 1 in combination with Figure 2.

14. A method for interacting with an automated teller machine substantially as described hereinbefore with reference to the accompanying drawings.
